# EUROPEAN PATENT APPLICATION

(11) **EP 4 524 441 A1**
(43) Date of publication of application: **19.03.2025**
(21) Application number: 24199927.5
(22) Date of filing: 12.09.2024
(51) Int. Cl.: F16K 27/02, F16K 31/06, F16K 31/40, F16K 47/12

(54) **WATER VALVE OF REDUCED NOISE AND METHOD THEREFOR**

(30) Priority: 14.09.2023 US 202318466982
(71) Applicant: Robertshaw Controls Company, Itasca, IL 60143 (US)
(72) Inventor: Cerizza, Giovanni, 26900 Lodi (IT); Torti, Cristina, 20861 Brugherio (IT); Ferrari, Marco, 21022 Azzate (Varese) (IT)
(74) Representative: Cohausz & Florack

(57) **Abstract**

A water valve includes a valve body having an inlet and an outlet and a flow path extending through the valve body between the inlet and the outlet. A spiraled channel along the flow path channels a fluid flow from the inlet towards the outlet.

## Description

### FIELD OF THE INVENTION

This invention generally relates to water valves and more particularly to the reduction of noise in water valves.

### BACKGROUND OF THE INVENTION

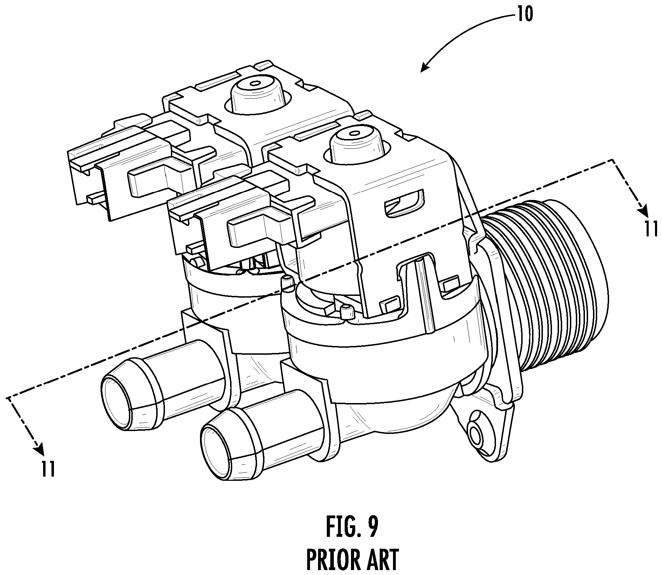

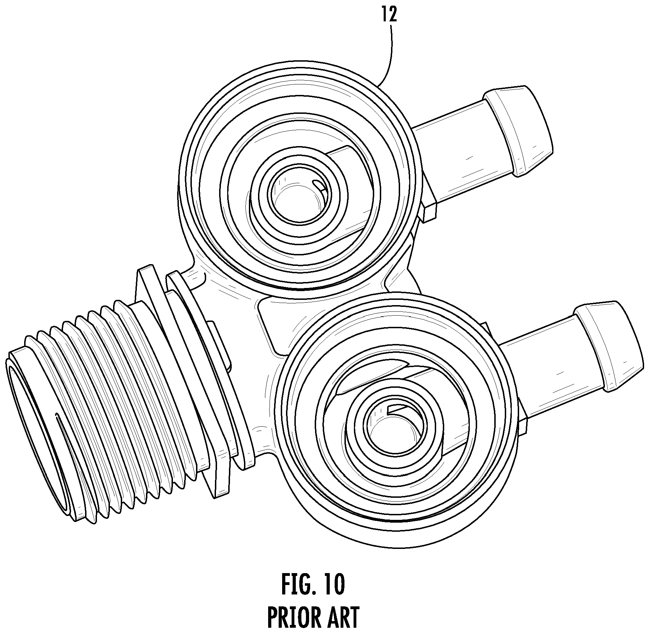

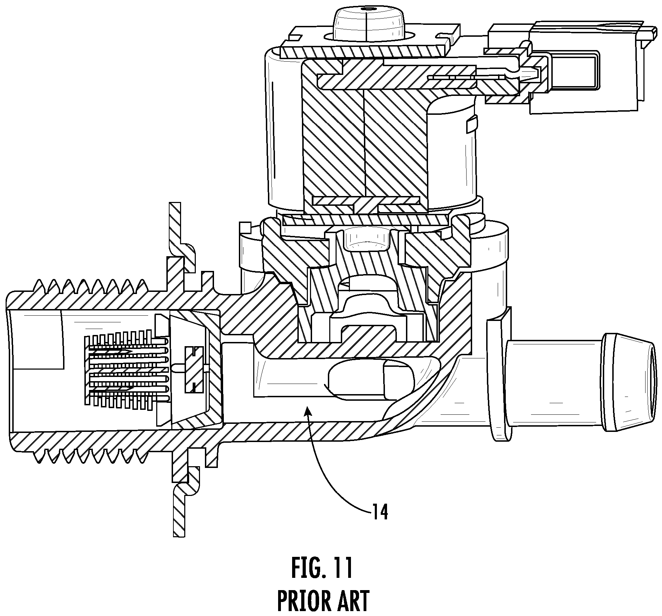

Water valves can be used in any number of applications, for example clothes washers also referred to as wash machines, dishwashers, showers, air conditioning systems and other well-known domestic or commercial applications. Water valves create noise as water flows through the water valves when they are open. For example, a prior art water valve 10 for a wash machine is shown in FIG. 9. The prior art water valve 10 has a prior art valve body 12 (FIG. 10) and a prior art inlet 14 (FIG. 11). It has been found that prior art water valves like those of the prior art water valve 10 create more noise than desired. Consumers prefer applications that are quiet which means manufactures understand a water valve that makes less noise in operation is highly desirable. The quieter the water valve, the quieter the application using the water valve and hence the greater appeal of the application to consumers.

### BRIEF SUMMARY OF THE INVENTION

The invention provides a water valve with reduced noise in operation. These and other advantages of the invention, as well as additional inventive features, will be apparent from the description of the invention provided herein.

In one aspect, the invention provides a water valve with a valve body having an inlet and an outlet and a flow path extending through the valve body between the inlet and the outlet. A spiraled channel along the flow path channels a fluid flow from the inlet towards the outlet.

In another aspect, the invention provides a water valve with a valve body having an inlet, a first outlet and a second outlet. A first flow path extends through the valve body between the inlet and the first outlet. A second flow path extends through the valve body between the inlet and the second outlet. A first spiraled channel channels a first fluid flow along the first flow path. A second spiraled channel channels a second fluid flow along the second flow path.

In still another aspect, the invention provides a water valve with a valve body having an inlet and an outlet and a flow path extending through the valve body between the inlet and the outlet. A valving member separates an inlet cavity from an outlet cavity within the valve body. The flow path between the inlet and the inlet cavity includes a convex surface over which a fluid flow must pass as it proceeds along the flow path.

In an embodiment, the spiraled channel is a channel that is a helix.

In an embodiment, an annular wall is located within a cavity of the valve body and defines an outlet passage out of the cavity. The helix extends around the annular wall.

In an embodiment, the valve body defines a cavity and a hollow tube located within the cavity. An outlet passage is located within the hollow tube. A radial outermost surface of the hollow tube defines a first channel wall of the spiraled channel.

In an embodiment, the cavity is surrounded by an annular wall of the valve body and the annular wall of the valve body defines a second channel wall of the spiraled channel.

In an embodiment, a bottom of the spiraled channel is defined by the valve body and extends between the first channel wall and the second channel wall.

In an embodiment, the bottom is a ramped planar surface as it spirals around the hollow tube.

In an embodiment, the hollow tube has a first tube end providing a valve seat.

In an embodiment, the spiraled channel has a first channel end proximate a cavity inlet defined by the valve body and a second channel end proximate the valve seat at the first tube end.

In an embodiment, a fluid flowing in the flow path flows from the cavity inlet into a channel inlet at the first channel end imparting a spiral flow of the fluid around the hollow tube to the valve seat.

In an embodiment, a diaphragm assembly of a valve member assembly of the water valve is operable to open and close the outlet passage at the valve seat, and wherein the spiraled channel is located between the diaphragm assembly and the cavity inlet.

In an embodiment, the diaphragm assembly separates the cavity into an outlet cavity and an inlet cavity. The spiraled channel is located entirely within the inlet cavity with no portion in the outlet cavity.

In an embodiment, the water valve has a solenoid. The solenoid when energized unseats the diaphragm assembly on the valve seat to open the flow path. The solenoid when deenergized allows for the diaphragm assembly to seat on the valve seat to close the flow path.

In an embodiment, an appliance, for example a wash machine includes the water valve so as to take in a flow of water and divide the water into a first fluid flow and to a second fluid flow. The second fluid flow is heated to provide hot water in the wash machine.

In an embodiment, an appliance, for example a wash machine includes the water valve constructed so as to take in a first flow of water at a first temperature and a second flow of water at a second temperature. The water valve mixes the first flow and the second flow and outlets a single fluid flow at the desired temperature for washing clothes within the wash machine.

In an embodiment, the flow path between the inlet and a channel inlet of the spiraled channel includes a convex surface over which the fluid flow must pass as it proceeds to the channel inlet.

In an embodiment, the convex surface extends from an inlet flow regulator located within the inlet and the channel inlet.

In an embodiment, the first flow path between the first inlet and a first channel inlet of the first spiraled channel includes a first convex surface over which the first fluid flow must pass as it proceed to the first channel inlet. The second flow path between the second inlet and the second channel inlet of the second spiraled channel includes a second convex surface over which the second fluid flow must pass as it proceeds to the second channel inlet.

In yet another aspect, the invention provides a method for reducing noise in a water valve. The method includes the steps of inletting water into a valve body of the water valve. The method includes the step of passing the water over a convex surface within the inlet of the valve body. The method includes the step of channeling a flow of the water along a spiraled channel from an inlet of the valve body towards an outlet of the valve body.

In an embodiment, the method includes the step of outletting the water through an outlet passage. The outlet passage is defined by a hollow tube within the valve body. The hollow tube has a passage inlet at a first end of the hollow tube and a passage outlet at a second end of the hollow tube. The spiraled channel extends around the hollow tube from the first end to the second end.

In an embodiment, the method includes the step of actuating a solenoid to inlet water into the valve body and de-actuating the solenoid to stop the inletting of the water into the valve body.

Other aspects, objectives and advantages of the invention will become more apparent from the following detailed description when taken in conjunction with the accompanying drawings.

### BRIEF DESCRIPTION OF THE DRAWINGS

The accompanying drawings incorporated in and forming a part of the specification illustrate several aspects of the present invention and, together with the description, serve to explain the principles of the invention. In the drawings:
FIG. 1 is an isometric view of a water valve according to the teachings of the instant application;
FIG. 2 is a cross section taken about line 2-2 of a first water valve of the water valve of FIG. 1;
FIG. 3 is an isometric view of an insert of the water valve of FIG. 1;
FIG. 4 is a cross section taken about line 4-4 of the water valve of FIG. 1;
FIG. 5 is an isometric view of the valve body of FIG. 1;
FIG. 6 is a cross section of the body taken about line 6-6 of FIG. 5;
FIG. 7 is a cross section taken about line 7-7 of the water valve of FIG. 1;
FIG 8 is a cross section taken about line 8-8 of the water valve of FIG. 1;
FIG. 9 is an isometric view of a prior art water valve;
FIG. 10 is an isometric view of the body of the prior art valve of FIG. 8; and
FIG. 11 is a cross section taken about line 11-11 of FIG. 9.

While the invention will be described in connection with certain preferred embodiments, there is no intent to limit it to those embodiments. On the contrary, the intent is to cover all alternatives, modifications and equivalents as included within the spirit and scope of the invention as defined by the appended claims.

### DETAILED DESCRIPTION OF THE INVENTION

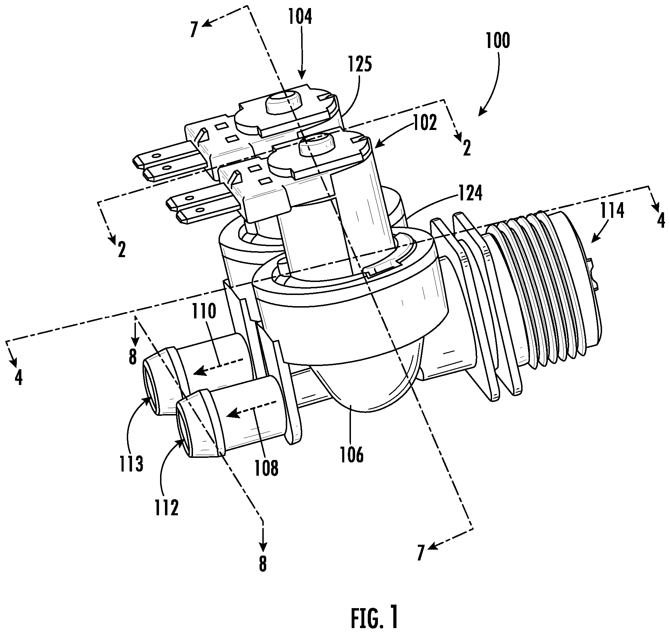

FIG. 1 illustrates a water valve 100 according to the teachings of the instant application. The structure of the water valve 100 that will be described herein reduces the noise produced during a flow of water through the water valve 100 relative to the noise produced by prior art water valves, for example, the prior art water valve 10 (FIG. 9).

The water valve 100 illustrated in FIG. 1 includes a first water valve 102 and a second water valve 104 sharing a valve body 106. The water valve 100 may be used in applications such as a wash machine, or any applications where a hot and cold water mix, or two fluid flows are mixed and outlet as a single flow. However, it is not the intent to limit the invention to an application in a wash machine nor to a water valve 100 that is a mixing valve. Indeed, it is the intent to cover by the teachings set forth in this application water valves that control the flow of water into an application. Such valves when turned "on" inlet water into the appliance but when turned "off" stop the flow of water into the application. Such water valves have only one inlet and one outlet to permit water to flow into an appliance. The teachings of the instant application are applicable to such water valves as will be made further evident from the description herein.

Still further, those skilled in the art will readily appreciate that appliances around the world, for example a wash machine in Europe, may have a water valve 100 with a single water inlet 114 and two outlets 112, 113, because the wash machines in Europe heat water within the wash machine. Thus, while there is a single water inlet 114 into the water valve 100, within the wash machine via the water valve 100, two flow streams are output from the water valve 100. A first flow provides water within the wash machine at a first temperature. The second flow of water is heated to provide water within the machine at a second temperature.

However, in other parts of the world, for example the United States, water is typically already heated before it comes into the washing machine. Accordingly, in washing machine regions like the United States, there is a hot-water inlet and a cold-water inlet in water valves that are water mixing valves. The two flows of water entering the washing machine are mixed in the water valve, and there is a single outlet from the water mixing valve into the washing machine.

In light of the foregoing, water valve 100 will be described with respect to typical use in Europe, however, the water valve 100, can easily be configured as readily understood by those skilled in the art, to operate in the United States such that there are two inlets and a single outlet.

The water valve 100 receives fluid through the inlet 114 and divides the fluid into a first flow path 108 and a second flow path 110. The first flow path 108 extends between the inlet 114 and the outlet 112. The second flow path 110 extends between the inlet 114 and the outlet 113.

The first water valve 102 and the second water valve 104 are structurally similar such that the description of the first water valve 102 also describes the second water valve 104. Accordingly, only the first water valve 102 will be described with the understanding the same description applies to the second water valve 104. Further, as discussed above, the teachings of the instant application are applicable not only to water valve 100, but to single water valves as for example, that are structured as will be described herein with respect to first water valve 102.

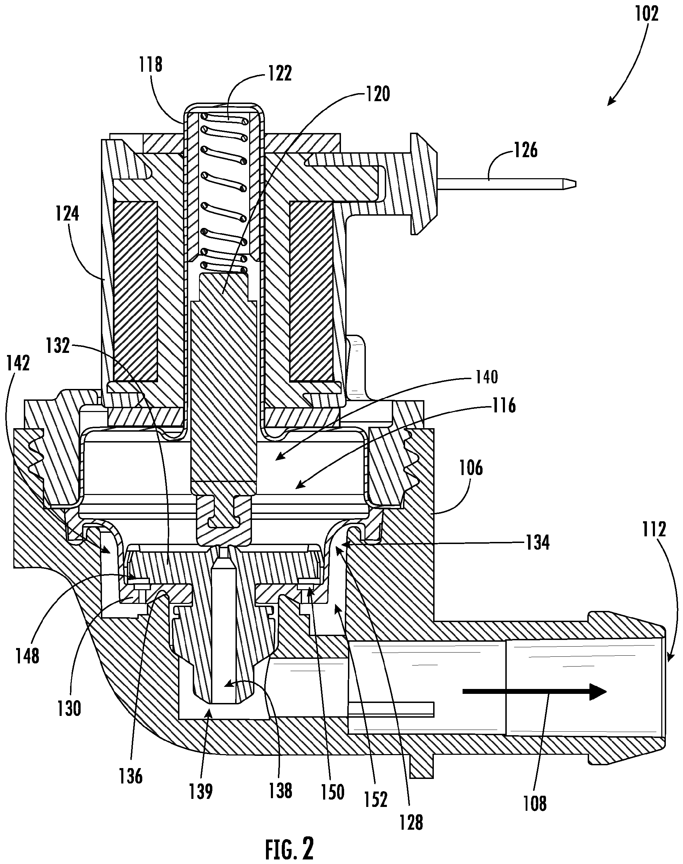

FIG. 2 illustrates a cross section of the first water valve 102 in a closed position. Water valve 102 includes the valve body 106 having an inlet 114 (FIG. 1) and an outlet 112. The first flow path 108 extends between inlet 114 (FIG. 1) and outlet 112. A first diaphragm assembly 116 is situated within the first flow path 108 and is operable to open and close the first flow path 108 to allow or prevent fluid flow between inlet 114 (FIG. 1) and outlet 112 through the first water valve 102. First water valve 102 also includes a guide tube 118 which is connected to the valve body 106. Guide tube 118 is used to contain an armature 120 which is biased within an internal bore of guide tube 118 by a spring 122. Spring 122 biases armature 120 against first diaphragm assembly 116 to maintain the first water valve 102 in a closed position, that is the position in which first fluid flow between inlet 114 (FIG. 1) and outlet 112 is prevented.

First water valve 102 also includes a solenoid actuator 124 attached to guide tube 118. Solenoid actuator 124 includes contacts 126 for an electrical connection. Current applied to solenoid actuator 124 via the electrical contacts 126 causes armature 120 to move within guide tube 118 against the biasing force of spring 122 to transition first water valve 102 from the closed position to an open position in which water is permitted to flow between inlet 114 (FIG. 1) and outlet 112.

First diaphragm assembly 116 includes diaphragm assembly 128 having a flexible diaphragm 130 with an insert 132 mounted thereto. Diaphragm 130 is movable within a first cavity 134 of the valve body 106 to open and close water valve 102. Armature 120 acts against insert 132 to apply a downward force against thereto to seat diaphragm 130 against a first valve seat 136 within the first cavity 134 of valve body 106, as described below. When solenoid actuator 124 is energized to move armature 120 upwardly within guide tube 118, armature 120 no longer exerts a downward force against insert 132 (as well as diaphragm 130 via their connection) thereby exposing a pilot passageway 138. As a result, water pressure within first cavity 134 acts upwardly against diaphragm 130 and water escapes an outlet cavity 140 via pilot passageway 138. This allows diaphragm 130 and insert 132 to continue to move upwardly, ultimately unseating them from first valve seat 136 for full open flow through outlet passage 139 to outlet 112.

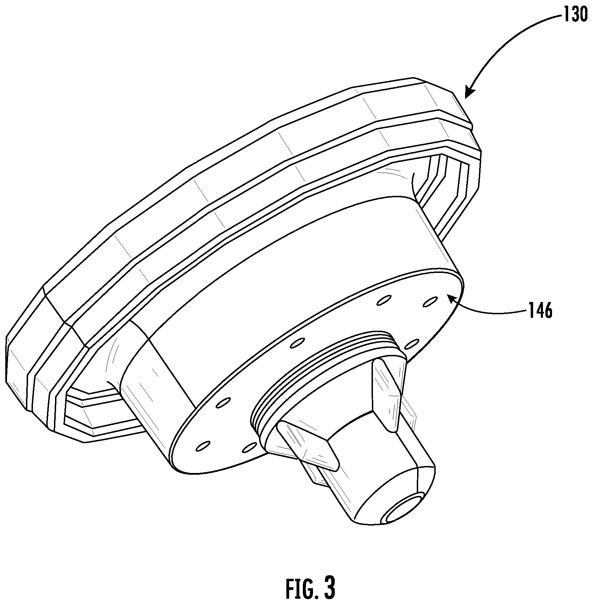

Armature 120 is biased by spring 122 against insert 132 such that diaphragm 130 contacts valve seat 136. Diaphragm 130 separates first cavity 134 into an inlet cavity 142 and the outlet cavity 140 situated respectively on either side of diaphragm 130. In the closed position, water entering inlet 114 may proceed into inlet cavity 142. This water may then pass through diaphragm 130 by way of a plurality of passageways 146 (FIG. 3) formed through diaphragm 130. Passageways 148, 150 are formed through insert 132. As such, in the closed position water entering inlet 114 is in fluid communication with both inlet cavity 142 and outlet cavity 140.

However, further flow of water through water valve 102 is prevented because armature 120 seals off a pilot passageway 138 through insert 132. Upon the application of electrical current to solenoid actuator 124, armature 120 is moved upward to unseat armature 120 from insert 132 thereby exposing the uppermost opening of pilot passageway 138 to outlet cavity 140.

Because the water in outlet cavity 140 is pressurized at the same pressure as that of the water in inlet cavity 142, and assuming the pressure through outlet 112 and passageway 138 is less than that of inlet cavity 142, this water then proceeds to evacuate from outlet cavity 140 through pilot passageway 138 to outlet 112. This causes a pressure differential on either side of diaphragm 130 such that the pressure in the inlet cavity 142 is greater than that of the pressure in outlet chamber 140. This pressure differential thus causes diaphragm 130 to unseat from first valve seat 136 thereby fully exposing the opening surrounded by first valve seat 136 to inlet cavity 142. This results in a full opening of water valve 102 allowing water to flow from inlet 114 through inlet cavity 142, the opening surrounded by first valve seat 136 and out of outlet passage 139 to outlet 112.

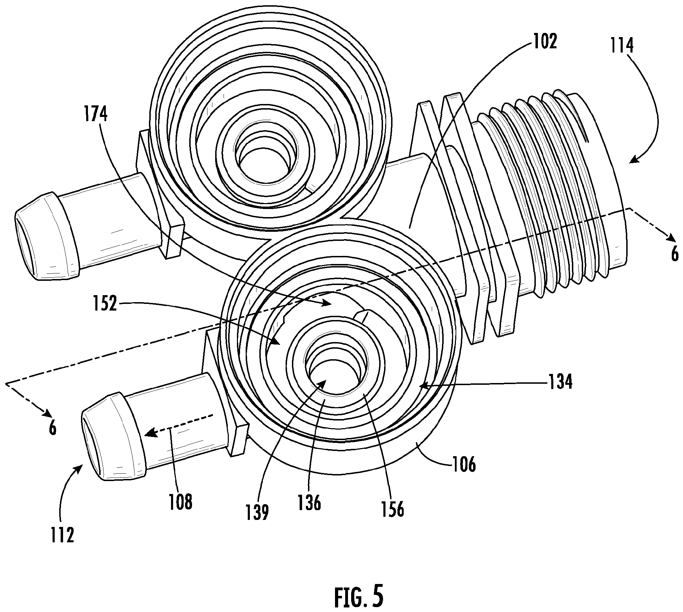

The diaphragm assembly 128 of the first diaphragm assembly 116 is operable to open and close the outlet passage 139 at the valve seat 136. A spiraled channel 152 is located between the diaphragm assembly 128 and a cavity inlet 174 (FIG. 5). The diaphragm assembly 128 separates the first cavity 134 into the outlet cavity 140 and the inlet cavity 142 and the first spiraled channel 152 is located entirely within the inlet cavity 142 with no portion in the outlet cavity 140. The first water valve 102 is a solenoid valve. Energizing the solenoid actuator 124 and deenergizing the solenoid actuator 124 makes the first water valve 102 operable to seat and unseat the diaphragm assembly 128 on the first valve seat 136 to open and close the flow path 108 through the first valve 102.

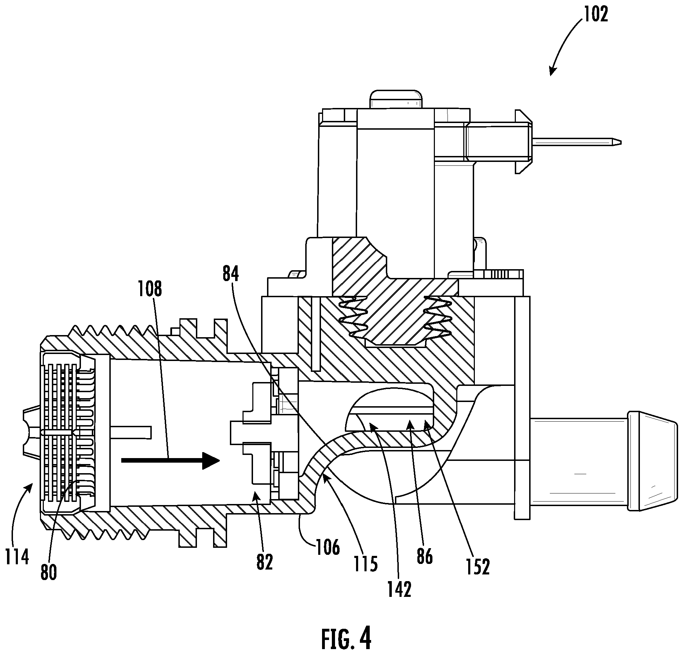

The cross section of FIG. 4 illustrates the inlet 114 showing the first flow path 108 proceeding from a filter 80 through an inlet flow regulator 82 where the fluid must pass over a first convex surface 84 directing the fluid into the first channel inlet 86 of the first spiraled channel 152. The first convex surface 84 extends from the inlet flow regulator 82 located within the inlet 114 and the first channel inlet 86. The first convex surface 84 gives the valve body 106 a whistle shape 115 to the inlet 114. Because the fluid must flow over the convex surface 84 and because of the reduced volume within this section of the inlet 114 lower noise is produced. Thereby, the area for the fluid flow is kept more constant with only a gradual change in volume as compared to prior art valves without the convex surface 84.

FIG. 5 illustrates the valve body 106 of the first water valve 102. The valve body 106 has the inlet 114 and the outlet 112 and the first flow path 108 extending through the valve body 106 between the inlet 114 and the outlet 112. A first spiraled channel 152 along the first flow path 108 channels a first fluid flow from the inlet 114 towards the outlet 112.

Outlet passage 139 is located within the first cavity 134 of the valve body 106. The spiraled channel 152 is a channel that is a helix within the first cavity 134 of the valve body 106. By helix it is meant that it is a curve on a cylindrical surface that would become a straight line if the surface were unrolled into a plane. It is a spiral extending in three dimensions. More specifically, the first spiraled channel 152 that is a helix extends around an annular wall 156 that defines and surrounds the outlet passage 139 out of the first cavity 134. The spiraled channel 152 provides a shaped structure within and part of the valve body 106 that has been found to reduce noise in the first water valve 102 (FIG. 1) and the water valve 100. The spiraled channel 152 keeps the area for the water passage as constant as possible. The area for the first fluid flow is only gradually changing relative to the prior art valves (e.g. FIG. 10) and removes the step, restriction and sudden enlargement of the prior art valves (e.g. FIG. 10).

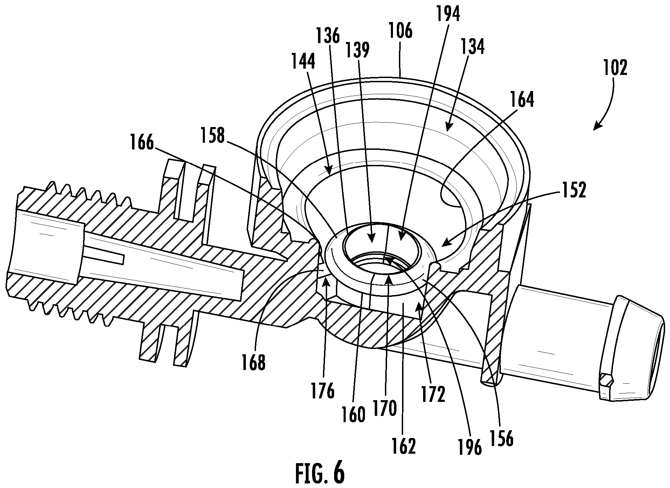

Turning now to the cross section of FIG. 6, the valve body 106 defines the first cavity 134 in the first water valve 102. The valve body 106 forms a hollow tube 158 within the first cavity 134 such that the outlet passage 139 is located within the hollow tube 158. The annular wall 156 is a stepped wall of the hollow tube 158 that includes radial outermost surfaces 160 that define a first channel wall of the first spiraled channel 152. The first cavity 134 is surrounded by an interior annular wall 164 of the valve body 106. The interior annular wall 164 of the valve body 106 defines a second channel wall of the first spiraled channel 152. A bottom 168 of the first spiraled channel 152 is defined by the valve body 106 and extends between the first channel wall and the second channel wall.

The bottom 168 is a ramped planar surface as it spirals around the hollow tube 158. The hollow tube 158 has a first tube end providing the valve seat. The first spiraled channel 152 has a first channel end 172 proximate a cavity inlet 174 (FIG. 5) defined by the valve body 106. The cavity inlet 174 (FIG. 5) inlets fluid into the first channel end 172. The first spiraled channel 152 has a second channel end 176 proximate the first valve seat 136 at the first tube end 170. At this point in the disclosure, it is readily apparent to those skilled in the art, the first fluid flow flows from the cavity inlet 174 (FIG. 5) into the channel inlet 86 (FIG. 4) at the first channel end 172 imparting a spiral flow of the fluid around the hollow tube 158 as it flows up the first spiraled channel 152 to exit an outlet of the spiraled channel 158 at the second channel end 176 located proximate the valve seat 136 such that fluid can exit the outlet cavity 140 (FIG. 2) via the outlet passage 139.

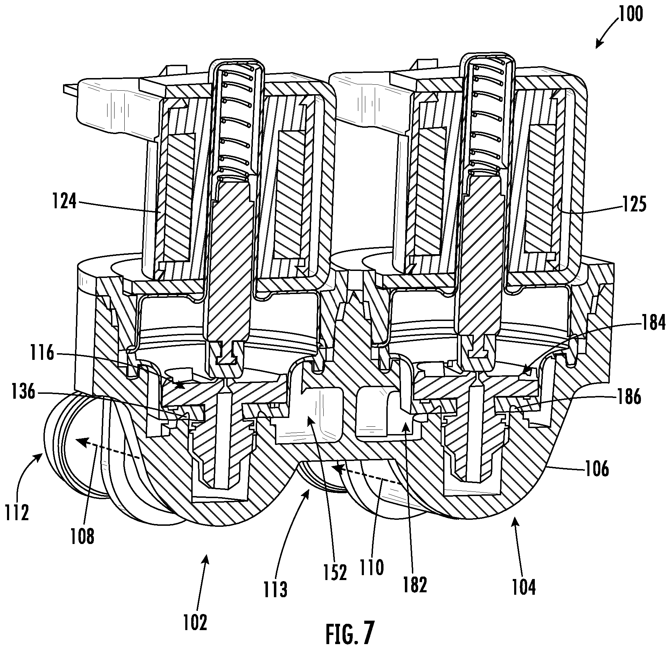

Turning now to FIG. 7, as previously discussed, second water valve 104 is structurally the same and functions as does first water valve 102. Therefore, it is readily understood by those skilled in the art at this point in the disclosure that the first water valve 102 can be used in an appliance, to control the inlet of fluid, e.g. water into the appliance or to stop the flow of fluid into an appliance. Alternatively, where an appliance, for example a washing machine, requires a mixing valve, then the water valve 100 may be used with the first flow path 108 controlled by its solenoid actuator 124 and the second flow path 110 controlled by its solenoid actuator 125.

The valve body 106 of the water valve 100 defines the inlet 114 (FIG. 1) and outlet 112. The valve body 106 also defines the second outlet 113. The first flow path 108 extends through the valve body 106 between the inlet 114 (FIG. 1) and the first outlet 112. The second flow path 110 extends through the valve body 106 between the inlet 114 (FIG. 1) and the second outlet 113. The first spiraled channel 152 channels a first fluid flow along the first flow path 108 and a second spiraled channel 182 channels a second fluid flow along the second flow path 110.

The first solenoid actuator 124 also referred to as the first solenoid is operable to open and close the first flow path 108 with the first diaphragm assembly 116 seating and unseating with the first valve seat 136 as discussed above. The second solenoid actuator 125 also referred to as the second solenoid is operable to open and close the second flow path 110 with a second diaphragm assembly 184 opening and closing against a second valve seat 186 in the second valve 104.

Water valve 100 provides a method to reduce noise in a water valve. The noise reduction method will be described with respect to first water valve 102, and is applicable to second water valve 104. The method includes the step of inletting water into the valve body 106 of the first water valve 102 and channeling a flow of the water within the valve body 106 along a spiraled channel 152 from an inlet 114 (FIG. 1) of the valve body 106 towards the outlet 112 of the valve body 106. The method includes outletting the water through an outlet passage 139 (FIG. 6) defined by the hollow tube 158 (FIG. 6) within the valve body 106. The hollow tube 158 (FIG. 6) has an outlet passage inlet at a first end 194 (FIG. 6) of the hollow tube 158 and an outlet passage outlet at a second end 196 (FIG. 6) of the hollow tube 158. The spiraled channel 152 extends around the hollow tube 158 (FIG. 6) from the first end to the second end of the hollow tube 158 and of the outlet passage 139.

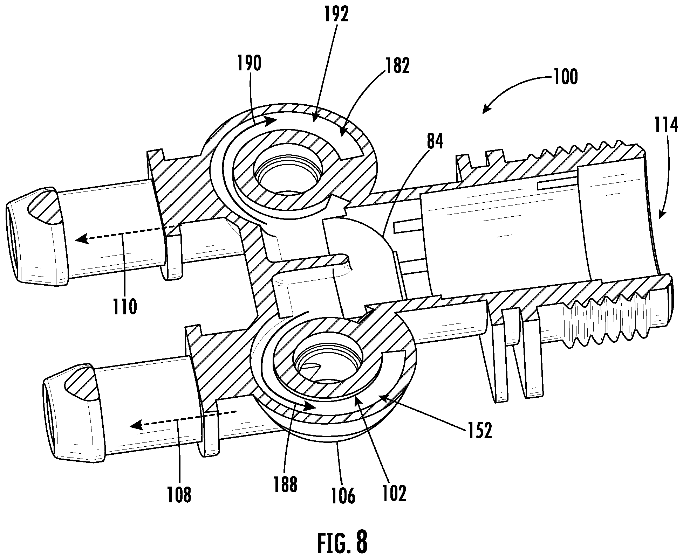

As can be seen in FIG. 8, the first fluid flow along the first flow path 108 passes over the convex surface 84 before entering the first spiraled channel 152. A second fluid flow along the second flow path 110 passes over the convex surface 84 before entering the second spiraled channel 182. The first fluid flow in the first flow path 108 through the first spiraled channel 152 flows in a first rotational direction 188 and the second fluid flow 88 along the second flow path 110 flows through the second spiraled channel 182 in a second rotational direction 190 opposite the first rotational direction 188.

A water valve similar to prior art valve 10 (FIG. 9) but with spiraled channels 152, 182 (FIG. 8) underwent controlled testing to measure its noise level. The sound pressure level of the water valve at water pressures of 1, 2.5, 3, and 3.5 Bar were recorded. The instruments utilized included noise chamber model 6530 of Mavinacoustica, portable pump model hydrovar HV of Lowara, and noise meter model NOR-139 of Norsonic with verified calibration. Noise level was measured with the ambient temperature (Tu) at 23 degrees Celsius. The water temperature (Tm) was 25 degrees Celsius. The supply voltage was 230Vac 50 Hz. The water pressures were measured at 1, 2.5, 3 and 3.5 Bar. The recording time was 15 seconds, the weight = A, the time constant F and the microphone distance was 1 meter.

The noise level was measure in Lps (sound pressure level) with the formula to convert Lps into Lw (sound power level) as: Lw(A)=Lps(A) +20log(d)+8 and where d = 1 meter the distance between the microphone and the equipment under testing (EUT).

The following results were obtained:

| **LpS(A)** | **LEQ** | **MAX** | **MIN** | **PEAK** | |
|---|---|---|---|---|---|
| **background noise** | 26.7 | 28.4 | 24.5 | 39.2 | |

| | | | | | **Pressure (bar)** |
|---|---|---|---|---|---|
| | 31.1 | 32.2 | 29.9 | 44.8 | 1 |
| | 37 | 37.6 | 36.6 | 51.2 | 2.5 |
| | 38.6 | 39 | 38.1 | 53.1 | 3 |
| | 39.5 | 39.9 | 39 | 53.6 | 3.5 |

The sound pressure level was found to be LPS(A)=39.5 dB (A) at 3.5 bar. The average sound power level LW was found to be 47.4 dB(A).

Similar testing performed on prior art valves (e.g. FIG. 10) without the spiraled channels 152, 182 (FIG. 8) found the average sound power level LW to be 56.4 dB(A).

The test results showed that the water valve with spiraled channels 152, 182 has a reduced noise level as compared to what has been heretofore known, namely 47.4 dB(A) v. 56.4 dB(A) of the prior art. The spiraled channels 152, 182 function to reduce the noise level of water valves heretofore known. More specifically the spiraled channels 152, 182 that are helix channels reduce the uncontrolled whirl of the fluid in the first internal cavity 134 and the second internal cavity 192 (FIG. 8) of the valve body 106. The spiraled channels 152, 182 reduce bottle neck and the sudden enlarged inlet area in the valve body that is present in the prior art water valves. Instead, directing the water through the spiraled channels 152, 182 controls the flow of the water to the outlets 112, 113 such that the spiraling channels 152, 182 reduce noise levels relative to the prior art valves.

A water valve similar to prior art valve 10 (FIG. 9) but with convex surface 84 (FIG. 8) located in the inlet, hence a whistle shaped inlet 115 (FIG. 4), underwent the controlled testing discussed above to measure its noise level.

The following results were obtained:

| **LpS(A)** | **LEQ** | **MAX** | **MIN** | **PEAK** | |
|---|---|---|---|---|---|
| **background noise** | 26.7 | 28.4 | 24.5 | 39.2 | |

| | | | | | **Pressure (bar)** |
|---|---|---|---|---|---|
| | 33.6 | 34.6 | 32.4 | 45.5 | 1 |
| | 37.1 | 37.5 | 36.6 | 50.8 | 2.5 |
| | 37.5 | 37.9 | 37.1 | 51.7 | 3 |
| | 38.8 | 39.3 | 38.3 | 52.8 | 3.5 |

The sound pressure level was found to be LPS(A)=38.8 dB (A) at 3.5 bar. The average sound power level LW was found to be 46.7 dB(A).

As noted above, similar testing performed on prior art valves (e.g. FIG. 10) without the convex surfaces 84, 90 (FIG. 8) found the average sound power level LW to be 56.4 dB(A).

The test results showed that the water valve with the convex surface like convex surface 84 (FIG. 8) has a reduced noise level as compared to what has been heretofore known, namely 46.7 dB(A) v. 56.4 dB(A) in the prior art valves.

Accordingly, the invention is intended to cover water valve 100 (FIG. 1) having both features shown to reduce noise, namely the spiraled channels 152, 182 (FIG. 8) and the convex surface 84 (FIG. 8) providing for an intake 114 (FIG. 8) that is whistle shaped 115 or just one of the features. It is also the intent to cover, a first water valve 102 (FIG. 1) that may have both the foregoing noise reducing features (spiraled channel 152 and convex surface 84 or only one of the noise reducing features as either one of the features alone or combined is believed to reduce the noise in a water valve below the noise heretofore know in such prior art valves, for example prior art valve 10 (FIG. 9).

All references, including publications, patent applications, and patents cited herein are hereby incorporated by reference to the same extent as if each reference were individually and specifically indicated to be incorporated by reference and were set forth in its entirety herein.

The use of the terms "a" and "an" and "the" and similar referents in the context of describing the invention (especially in the context of the following claims) is to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Preferred embodiments of this invention are described herein, including the best mode known to the inventors for carrying out the invention. Variations of those preferred embodiments may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject matter recited in the claims appended hereto as permitted by applicable law. Moreover, any combination of the above-described elements in all possible variations thereof is encompassed by the invention unless otherwise indicated herein or otherwise clearly contradicted by context.

## Claims

1. A water valve comprising:
a valve body having an inlet and an outlet and a flow path extending through the valve body between the inlet and the outlet;
wherein a spiraled channel along the flow path channels a fluid flow from the inlet towards the outlet.

2. The water valve of claim 1, wherein the spiraled channel is a channel that is a helix, wherein optionally an annular wall is located within a cavity of the valve body and defines an outlet passage out of the cavity, the helix extending around the annular wall.

3. The water valve of claim 1, wherein the valve body defines a cavity and a hollow tube located within the cavity, an outlet passage is located within the hollow tube, and wherein a radial outermost surface of the hollow tube defines a first channel wall of the spiraled channel.

4. The water valve of claim 3, wherein the cavity is surrounded by an annular wall of the valve body and the annular wall of the valve body defines a second channel wall of the spiraled channel, wherein optionally a bottom of the spiraled channel is defined by the valve body and extends between the first channel wall and the second channel wall, wherein optionally the bottom is a ramped planar surface as it spirals around the hollow tube.

5. The water valve of claim 3, wherein the hollow tube has a first tube end providing a valve seat.

6. The water valve of claim 5, wherein the spiraled channel has a first channel end proximate a cavity inlet defined by the valve body and a second channel end proximate the valve seat at the first tube end, wherein optionally a fluid flowing in the flow path flows from the cavity inlet into a channel inlet at the first channel end imparting a spiral flow of the fluid around the hollow tube to the valve seat.

7. The water valve of claim 5, wherein a diaphragm assembly of a valve member assembly of the water valve is operable to open and close the outlet passage at the valve seat, and wherein the spiraled channel is located between the diaphragm assembly and the cavity inlet, wherein optionally the diaphragm assembly separates the cavity into an outlet cavity and an inlet cavity and the spiraled channel is located entirely within the inlet cavity with no portion in the outlet cavity.

8. The water valve of claim 1, wherein the flow path between the inlet and a channel inlet of the spiraled channel includes a convex surface over which the fluid flow must pass, wherein optionally the convex surface extends from an inlet flow regulator located within the inlet and the channel inlet.

9. An appliance comprising the water valve of claim 1.

10. A water valve comprising:
a valve body comprising:
an inlet;
a first outlet;
a second outlet;
a first flow path extending through the valve body between the inlet and the first outlet;
a second flow path extending through the valve body between the inlet and the second outlet;
wherein a first spiraled channel channels a first fluid flow along the first flow path and a second spiraled channel channels a second fluid flow along the second flow path.

11. The water valve of claim 10, wherein the first flow path between the first inlet and a first channel inlet of the first spiraled channel includes a first convex surface over which the first fluid flow must pass and the second flow path between the second inlet and the second channel inlet of the second spiraled channel includes a second convex surface over which the second fluid flow must pass.

12. The water valve of claim 10, wherein a first solenoid is operable to open and close the first flow path with a first valve member and first valve seat and a second solenoid member is operable to open and close the second flow path with a second valve member and second valve seat.

13. The water valve of claim 10, wherein the first fluid flow through the first flow path through the first spiraled channel flows in a first rotational direction and the second flow in the second flow path flows through the second spiraled channel in a second rotational direction opposite the first rotational direction.

14. A method for reducing noise in a water valve, the method comprising the steps of:
inletting water into a valve body of the water valve;
passing the water over a convex surface within the inlet of the valve body;
channeling a flow of the water along a spiraled channel from an inlet of the valve body towards an outlet of the valve body.

15. A water valve comprising:
a valve body having an inlet and an outlet and a flow path extending through the valve body between the inlet and the outlet;
a valving member separating an inlet cavity from an outlet cavity within the valve body; and
wherein the flow path between the inlet and the inlet cavity includes a convex surface over which a fluid flow must pass.
